# EUROPEAN PATENT APPLICATION

(11) **EP 4 628 861 A1**
(43) Date of publication of application: **08.10.2025**
(21) Application number: 25162739.4
(22) Date of filing: 10.03.2025
(51) Int. Cl.: G01K 3/04, G01K 11/00, G01K 13/024, G01K 7/42

(54) **SACRIFICIAL TEMPERATURE COUPON FOR TURBOMACHINERY**

(30) Priority: 04.04.2024 US 202418626538
(71) Applicant: GE Vernova Technology GmbH, 5400 Baden (CH)
(72) Inventor: PARK, Junyoung, Greenville, 29615 (US)
(74) Representative: Openshaw & Co.

(57) **Abstract**

A method and a system enables a temperature (408) to which a component (200) within a turbomachine (100) was exposed, to be determined. The method includes operating the turbomachine (100) including the component (200) for an elapsed period of time, determining a thickness (410) of an oxide layer (302) that has formed on a coupon (300) attached to the component (200), and determining a temperature offset based on the thickness measurement (410) of the oxide layer (302). The method also includes determining the temperature (408) to which the component (200) was exposed using the temperature offset, and outputting the temperature (408) to which the component was exposed.

## Description

### BACKGROUND

The field of the disclosure relates generally to gas temperature measurement, and more specifically, to methods and systems for use in measuring gas temperature in various operating environments.

Combustion turbines, such as gas turbine engines, generally include a compressor section, a combustor section, a turbine section and an exhaust section. In operation, the compressor section inducts and compresses ambient air. The combustor section generally includes a plurality of combustors that receive the compressed air and mix it with fuel to form a fuel/air mixture. The mixture is combusted within the combustors to form a hot working gas that may be channeled to the turbine section where it is expanded through alternating rows of stationary airfoils and rotating airfoils and is used to generate power that can drive a rotor. The expanding gases exiting the turbine section can be exhausted from the engine via the exhaust section.

Combustion anomalies inside the turbine may cause undesirable damage and may possibly even destroy combustion engine components, such that repair or replacement of such components may be necessary. The fuel/air mixture channeled through the individual combustors is controlled during operation to facilitate maintaining one or more operating characteristics within a predetermined range, such as, for example, to maintain a desired efficiency and power output, to control emission levels, to prevent pressure oscillations, and/or to prevent flameouts. Within at least some control systems, hardwired thermocouples may be used to measure temperatures. However, such thermocouples can only measure temperatures in close proximity to their installed location. In other words, the thermocouples suffer from relatively low spatial resolution. As a result, components located a distance away from the thermocouple are generally exposed to different temperatures than those temperatures measured at the thermocouple. At the time of component failures, understanding the exposure temperature of failed component is a key factor in increasing the accuracy of a root cause analysis. Accordingly, a need exists for a system and methods to measure gas operating temperatures of various components at their installed location without the use of hardwired thermocouples.

### BRIEF DESCRIPTION

In one aspect, a method of determining a temperature to which a component within a turbomachine was exposed is provided. The method includes operating the turbomachine including the component for an elapsed period of time, determining a thickness of an oxide layer that has formed on a coupon attached to the component, and determining a temperature offset based on the thickness measurement of the oxide layer. The method also includes determining the temperature to which the component was exposed using the temperature offset, and outputting the temperature to which the component was exposed.

In another aspect, a measurement apparatus for use in determining an operating temperature within a turbomachine is provided. The measurement apparatus includes at least one coupon coupled to a component within the turbomachine, and a processor. The processor is configured to receive a measurement of a thickness of an oxide layer that formed on the coupon after the turbomachine has operated with the component for a pre-determined period of time, and to determine a temperature offset based on the thickness of the oxide layer. The processor is further configured to apply the temperature offset to a measured temperature taken within the turbomachine during operation, and to determine an actual temperature to which the component was exposed during operation of the turbomachine using the temperature offset.

In a further aspect, at least one non-transitory computer-readable storage medium with instructions stored thereon is provided. The instructions, in response to execution by at least one processor, cause the at least one processor to receive a measurement of a thickness of an oxide layer that formed on a coupon that had been attached to a component of a turbine machine that operated for a pre-defined period of time, and to determine a temperature offset based on the measured thickness of the oxide. The instructions also cause the at least one processor also to apply the temperature offset to an historical operating temperature of the turbomachine to determine an actual temperature to which the component was exposed during operation of the turbomachine, and to output the actual temperature to which the component was exposed during operation of the turbomachine.

The above description is provided as an overview of only some implementations disclosed herein. Those and other implementations are described in more detail here. In addition, some implementations include one or more processors of one or more computing devices, where the one or more processors are operable to execute instructions stored in associated memory, and where the instructions are configured to cause performance of any of the methods described herein. Some implementations also include one or more non-transitory computer readable storage media storing computer instructions executable by one or more processors to perform any of the methods described herein.

It should be appreciated that all combinations of the foregoing concepts and additional concepts described in greater detail herein are contemplated as being part of the subject matter disclosed herein. For example, all combinations of claimed subject matter appearing at the end of this disclosure are contemplated as being part of the subject matter disclosed herein.

### BRIEF DESCRIPTION OF THE DRAWINGS

The above-mentioned systems and methods, and other features of this invention will become more apparent, and the invention itself will be better understood by reference to the following description of embodiments of the invention taken in conjunction with the accompanying drawings, wherein:
Fig. 1 is a perspective cross-sectional view of an exemplary gas turbine engine.
Fig. 2 is a perspective view of an exemplary component that may be used with the turbine shown in Fig. 1 and including a sacrificial coupon that has been attached to the component.
Fig. 3 is a cross-sectional view of an exemplary coupon, such as the coupon shown in Fig. 2, after a layer of oxide has accumulated on the coupon.
Fig. 4 is a block diagram of an exemplary system that may be used to determine a thermal history of a gas turbine component by analyzing the oxides formed on a coupon attached to the component.
Fig. 5 is an exemplary user interface display that may be used with the system shown in Fig. 4 to input values used to determine an offset temperature.
Fig. 6 is an exemplary set of temperature data that may be output from the system shown in Fig. 4 and illustrating the actual operating temperature of a given component based on an offset that is applied to the thermal history data.
Fig. 7 is a flow diagram of an exemplary method of determining a thermal history of a gas turbine component by analyzing oxides formed on a coupon that is attached to the component.

Although the embodiments of the disclosure are described with reference to these specific preferred embodiments, it will be understood that the invention is not limited to these preferred embodiments. But to the contrary, the invention includes numerous alternatives, modifications and equivalents and it is evident that many alternatives, combinations, modifications and variations are apparent to those skilled in the art. Accordingly, the preferred embodiments of this invention, as set forth above are intended to be illustrative only, and not in a limiting sense. Various changes can be made without departing from the spirit and scope of this invention.

### DETAILED DESCRIPTION

In the following specification and the claims, reference will be made to a number of terms, which shall be defined to have the following meanings.

The singular forms "a," "an," "the," and "said" include plural references unless the context clearly dictates otherwise.

The terms "comprising," "including," and "having" are intended to be inclusive and mean that there may be additional elements other than the listed elements.

"Optional" or "optionally" means that the subsequently described event or circumstance may or may not occur, and that the description includes instances where the event occurs and instances where it does not.

References to "one embodiment" are not intended to be interpreted as excluding the existence of additional embodiments that also incorporate the recited features. Moreover, although specific features of various embodiments described herein may be shown in some drawings and not in others, this is for convenience only. In accordance with the principles of the present disclosure, any feature of a drawing and/or embodiment described herein may be referenced and/or claimed in combination with any feature of any other drawing and/or embodiment described herein. Furthermore, unless explicitly stated to the contrary, embodiments "including" or "having" an element or a plurality of elements having a particular property may include additional such elements not having that property.

As used herein, the term "real-time" refers to either the time of occurrence of the associated events, the time of measurement and collection of predetermined data, the time to process the data, or the time of a system response to the events and the environment. In the embodiments described herein, these activities and events occur substantially instantaneously.

As used herein, the terms "processor" and "computer" and related terms, e.g., "processing device," "computing device," and "controller" are not limited to just those integrated circuits referred to in the art as a computer, but instead refer broadly to a microcontroller, a microcomputer, a programmable logic controller (PLC), an application specific integrated circuit, and/or other programmable circuits, and such terms are used interchangeably herein. In the embodiments described herein, memory may include, but is not limited to, a computer-readable medium, such as a random access memory (RAM), and a computer-readable non-volatile medium, such as flash memory. Alternatively, a floppy disk, a compact disc - read only memory (CD-ROM), a magneto-optical disk (MOD), and/or a digital versatile disc (DVD) may also be used. Also, in the embodiments described herein, additional input channels may be, but are not limited to only being, computer peripherals associated with an operator interface such as a mouse and a keyboard. Alternatively, other computer peripherals may also be used such as, for example, but not be limited to, a scanner. Furthermore, in the embodiments described herein, additional output channels may include, but are not limited to only being, an operator interface monitor.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms such as "about," "approximately," and "substantially" is not to be limited to the precise value specified. In at least some instances, the approximating language may correspond to the precision of an instrument for measuring the value. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

In one embodiment, a system may be used to determine a thermal history of a gas turbine component by analyzing oxides formed on a coupon attached to the gas turbine component. More particularly, in one embodiment, an offset for the temperature component may be determined based on a relative distance of the coupon from the temperature sensor. The offset may be added or subtracted, as appropriate, to the temperatures included in the thermal history to determine the true, actual temperature that the component was exposed to during operation.

In one implementation, at least one sacrificial coupon is attached to each component of interest to determine the actual thermal limit of the component within the turbine configuration. The coupons may be attached to the coupon using spot welding, an adhesive, a mechanical fastener, and/or any other known coupling manner that enables the coupon to function as described herein and that does not adversely affect operation of the component. As described herein, the coupons may be used to monitor and/or determine the thermal history of the component. More particularly, a thickness of oxide present on an extracted coupon may be measured. The measured thickness of the oxide may be input into a calculation tool, such as an adder module or other computing device, to enable the actual exposure temperature at the component to be determined.

In one embodiment, a database maintains and stores the testing results for a wide variety of steel alloys, as well as the associated oxidation data. Steel alloys have different, known oxidation rates based on their particular chemical compositions. The oxidation data may include oxidation layer measurements in addition to corresponding recorded temperatures, pressures, and moisture levels. In general, higher temperature exposure corresponds to thicker oxide layers.

A cross-sectional examination may be performed on the coupon to reveal a thickness of the oxide layer or skin. The thickness of the layer may be correlated to an exposed temperature. Different components in the turbine have different chemical compositions, but the chemical compositions of the different coupons may be consistent and known. For example, a steel alloy may have a known chromium content. The chromium content affects the rate of change of the oxide thickness in a known manner.

In one illustrative example, a low temperature component positioned in a compressor section may operate at between about 500°F to about 900°F. In other embodiments, the system may be used with components that operate at different temperature ranges, such as between about 1000°F to about 2000°F. One or more steel coupons may be affixed to the compressor section. In other embodiments, the coupon may be fabricated from other materials, such as, but not limited to, nickel, chrome, platinum, Rene 77, and/or any other materials that enable the coupon to function as described herein, including noble metals. After a predefined number of operating hours, the coupon may be removed from the component. The coupon has a known chemistry, including a designed chromium content. A cross-sectional analysis may be performed on the coupon, and a thickness of the layer of oxide may be measured.

The thermal history of the turbine may be retrieved and input into a calculation tool, such as an adder or computing device. For example, the thermal history may be input into the system by a turbine operator and/or it may be determined through empirical data gathered from laboratory results. The thermal history may include temperatures measured at the hardwired thermocouple, as well as operational data. Operational data may include, but is not limited to only including, a record of starts, stops, ramp rate, and cool-down rate.

The thermal history may reflect temperatures within only specific sections of the turbine, i.e., measured at sensors (e.g., at the hardwired thermocouple). More particularly, temperature sensors may be positioned only within those certain sections. For example, thermal history temperatures of an implementation may include compressor discharge readings. As described herein, temperatures at components may vary depending on their relative distance away from the temperature sensors. Other factors that may cause variation may include surrounding components, radiation, and/or gas flow, among other environmental variables.

Despite the variation, the temperatures from the thermal history may be useful to determine temperature increases and decreases throughout the turbine. More particularly, the temperature at the component of interest will generally rise or fall in unison, or in concert, with the temperatures acquired in the thermal history. As such, the temperature changes may be used in conjunction with determined offsets to calculate the temperature at a particular component.

Because the component of interest may be several degrees cooler or hotter than the temperature measured at the sensor (e.g., depending upon the distance of the coupon from the sensor), the temperature readout may not reflect the actual temperature present at the component. To this end, the system may determine an offset for the temperature component based on the coupon's relative distance from the temperature sensor. The offset may be added or subtracted as appropriate to the temperatures included in the thermal history to determine the true, actual temperature to which the component was exposed during operation.

As explained herein, the offset may be determined by measuring the oxide thickness formed on the coupon. More particularly, the actual temperature that the coupon was exposed to may then be determined by the system based on the measured thickness of the oxide formed on the coupon. The determined coupon temperature at the time the coupon was extracted may be compared to the temperature in the histogram data of the thermal history, based on the elapsed time of operation of the coupon on the component. A calculated difference between the coupon temperature and the listed thermal history temperature (i.e., of the temperature sensor) may encompass the offset for the location of the coupon. The determined offset may then be applied to any temperature measurement in the thermal history to determine the temperature at each coupon on the component at any given time registered in the thermal history.

After the offset is known, the system may add or subtract the offset to all of the stored temperature measurements included in the thermal history of the turbine. As such, the system can determine the temperature at the component at each of the times included in the thermal history. Moreover, the system may be able to determine how long the component was exposed to a given temperature, and/or may also be able to determine a timeframe of when the failure occurred and the temperature of the component at the time of the failure.

In one embodiment, a full thermal history of a component is performed. Because of the relatively small size of the coupons, a plurality of coupons may be placed on or inside a wide range of components at a relatively low cost. Moreover, each coupon may be destroyed or otherwise oxidized before any harm comes to the actual component to which each coupon is affixed. The offset temperatures may increase the accuracy of temperature monitoring and/or of component failure analysis.

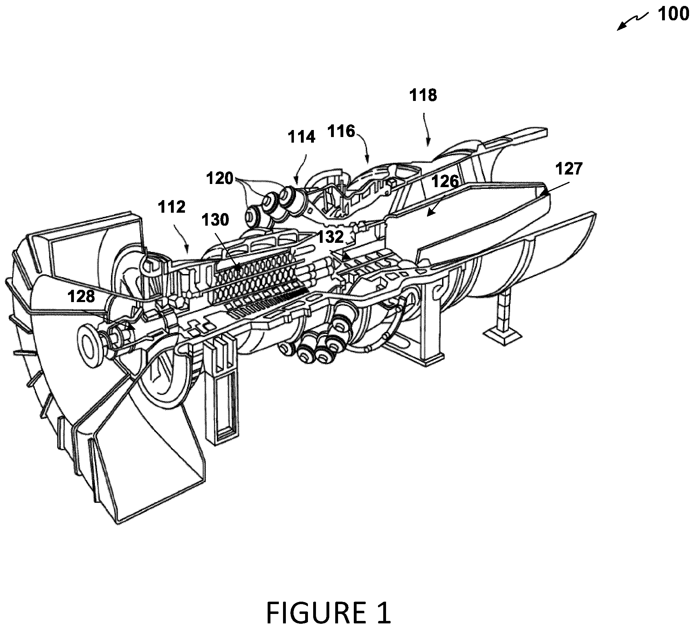

Turning more particularly to the drawings, Fig. 1 illustrates a perspective cross-sectional view of an exemplary gas turbine engine 100. In the exemplary embodiment, the engine 100 includes a compressor section 112, a combustor section 114, a turbine section 116, and an exhaust section or system 118. The combustor section 114 includes a plurality of combustors 120 that each include a combustion shell and a cover plate. A combustor liner or basket 126 and transition duct define a passage for conveying hot working gases that flow downstream towards the turbine section 116 prior to being exhausted through an exhaust section 118. The present invention is operable with any other known combustor geometry and/or gas turbine engine designs, including, but not limited to, can, can-annular or annular construction combustors in stationary land-based and/or vehicular applications.

During operation of the engine 100, compressed air from the compressor section 112 is provided to the combustor section 114 where it is combined with fuel supplied by a fuel injection system 128. The fuel/air mixture is ignited to form combustion products that make up the hot working gases. It may be understood that combustion of the fuel and air may occur at various axial locations along the passage through the combustor liner or basket 126 and the transition duct 127 and into the turbine section 116. The hot working gases expand through the turbine section 116 and are exhausted through the exhaust section/system 118.

In the illustrative combustion turbine 100, a temperature sensor 130 (e.g., a hardwired thermocouple) may be positioned as illustrated, immediately upstream from a component 132 of interest. For example, engineers may wish to study the temperature of the component 132 to determine at what temperature the component 132 was actually exposed to and/or what the actual temperature the component 132 was when it failed. However, the temperature around the component 132 may vary within the turbine 100 depending upon the distance between the temperature sensor 130 and component 132. Other possible variant factors may include, but are not limited to only including, exposed radiation, other component proximity, and/or surrounding airflow, among other conditions. As such, the component 132 may be several degrees cooler or hotter than the temperature at the installed temperature sensor 130, and as such, the temperature readout at the sensor 130 may not reflect the actual temperature exposure at the component 132.

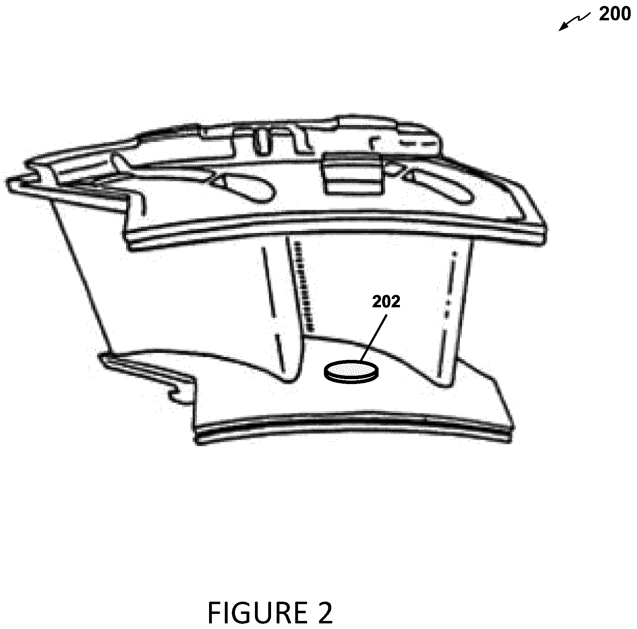

Fig. 2 is a perspective drawing of an exemplary component 200, such as may be included in the turbine 100 shown in Fig. 1. A sacrificial coupon 202 has been coupled to component 200. The coupon 202 may be spot-welded, adhered, bolted, or otherwise fastened to the component 200 in another known manner, that enables the coupon 202 to function as described herein. As described herein, the coupon 202 may be used to monitor the thermal history of the component 200. More particularly, the coupon 202 may be attached to the component 200, and the turbine 100 may operate as normal. Although the coupon 202 is depicted as being a disc, the coupon 202 may have any other shape or size that enables the coupon 202 to function as described herein. After a predetermined amount of time has elapsed during operation, a layer of oxide may appear and grow in depth on the exposed surfaces of the coupon 202. The coupon may be removed after operation of the turbine ends, and a thickness of oxide present on each extracted coupon 202 may be measured. The measured thickness may be input to the system to enable the exposure temperature at the component 200 to be determined. A replacement coupon may then be attached to the component 200 to enable continued analysis.

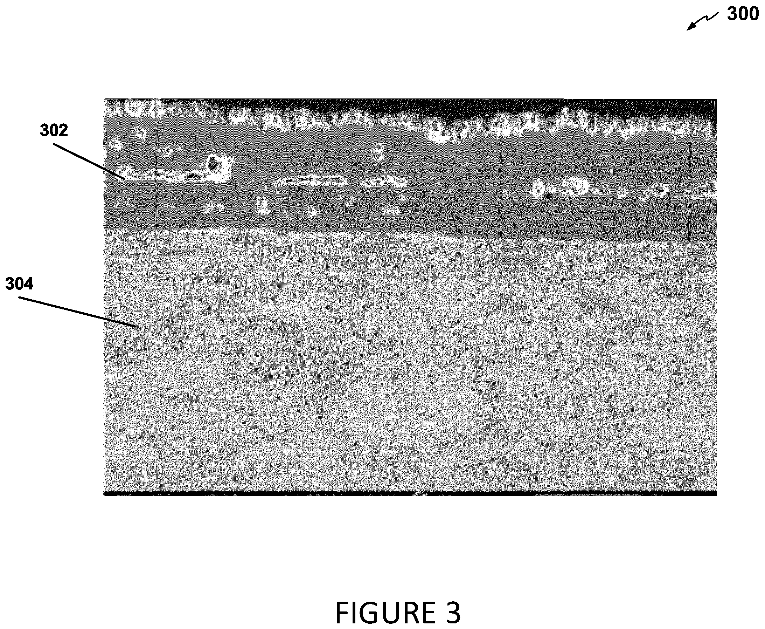

Fig. 3 illustrates an enlarged cross-sectional view of a coupon 300 that includes a layer 302 of oxide that has accumulated. The thickness of the oxide layer 302 may be measured after the coupon 300 is detached or uncoupled from the component 200 and cross-sectioned. In one embodiment, an average value of multiple measurements of the thickness of the oxide layer 302 may be calculated and input to the system. In general, higher temperature exposure generally corresponds to thicker oxide layers. Other than the operating temperature, other factors that may affect the thickness of the oxide growth on the surface 304 of the coupon 300 may include, but are not limited to only including, the pressure and/or moisture to which the component 200, and thus the coupon 300, is exposed.

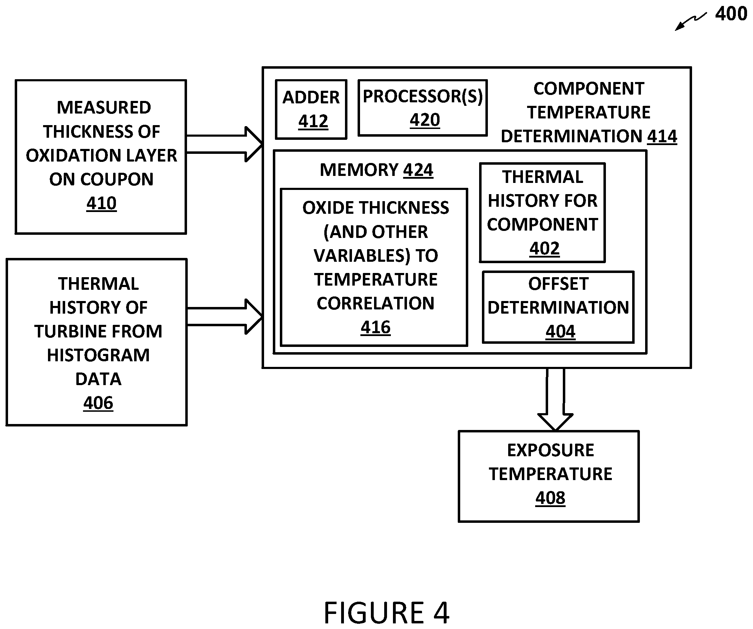

Fig. 4 is a block diagram of an exemplary system 400 that may be used to determine a thermal history 402 of a gas turbine component, such as component 200 (shown in Fig. 2) by analyzing the oxides formed on a coupon attached to the component during operation. As represented in the diagram, an offset determination module 404 may determine an offset for the temperature component based on a relative distance of the coupon from the temperature sensor. The offset may be determined using a measured thickness 410 of the oxide layer that has formed on the coupon after it has been removed from the coupon. The offset may be added or subtracted, as appropriate, to the temperatures included in a thermal history 406 of the turbine to determine the true, actual temperature 408 to which the component was exposed.

The thermal history 406 of the turbine may be retrieved as inputs into a calculation tool, such as an adder module 412. The thermal history 406 may be provided by a turbine operator or may be input using empirical data gathered from laboratory results. The thermal history 406 may include, but is not limited to only including, temperatures, as well as operational data. Operational data may include, but is not limited to only including, a record of starts, stops, ramp rate, a cool down rate, and/or any other operational data associated with the turbine operation.

The adder module 412 may include a digital circuit that performs addition of numbers. In the exemplary embodiment, the adder module 412 includes a component temperature determination 414, which may include a computing device that uses one or more processors 422 to perform addition, as well as to execute the various of functions of the illustrative modules 404, 412, and/or 416 of a memory 424. An oxide thickness-to-temperature correlation module 416 may correlate the thermal history data 406, with operating pressure and moisture levels. The system 400 may additionally account for a chromium level and/or time of exposure data.

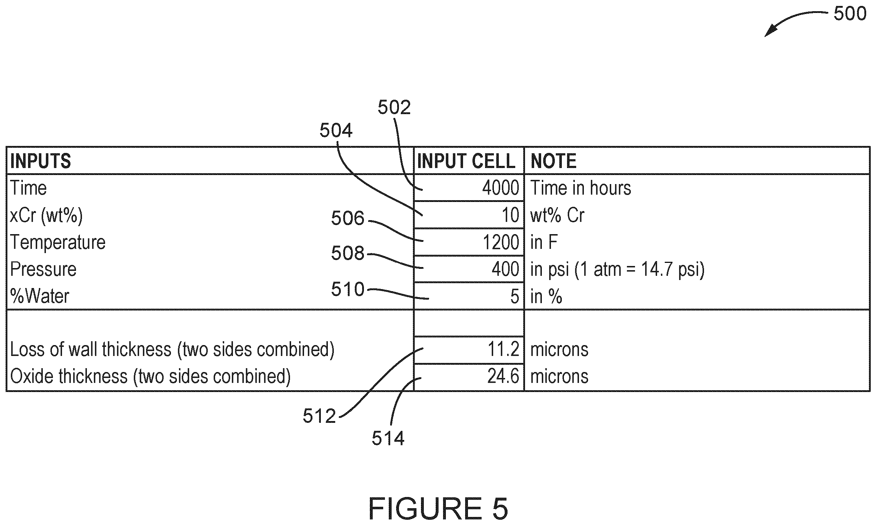

Fig. 5 shows an exemplary user interface screen 500 that may be used to input exemplary values 502, 504, 506, 508, 510, 512, and/or 514 into the system 400 (shown in Fig. 4) that may be used to determine an offset temperature. More particularly, a user may enter an elapsed amount of operating time 502 of heat exposure of the coupon in hours. Another field may include a percentage 504 of chromium within the coupon. Another input may include operating temperature(s) 506 from the histogram data. In addition, operating pressure 508 and water percentage or moisture content 510 may also be input into the interface 500. Other inputs may include a measurement of an amount of loss of wall thickness 512 and/or a measurement of the oxide thickness 514. As described herein, in one embodiment, the database may be accessed and maintained with testing results associated with a wide variety of steel alloys and/or other materials, as well as with the associated oxidation data. The oxidation data may include oxidation layer measurements, for example, in addition to corresponding recorded temperatures, pressures, and moisture levels.

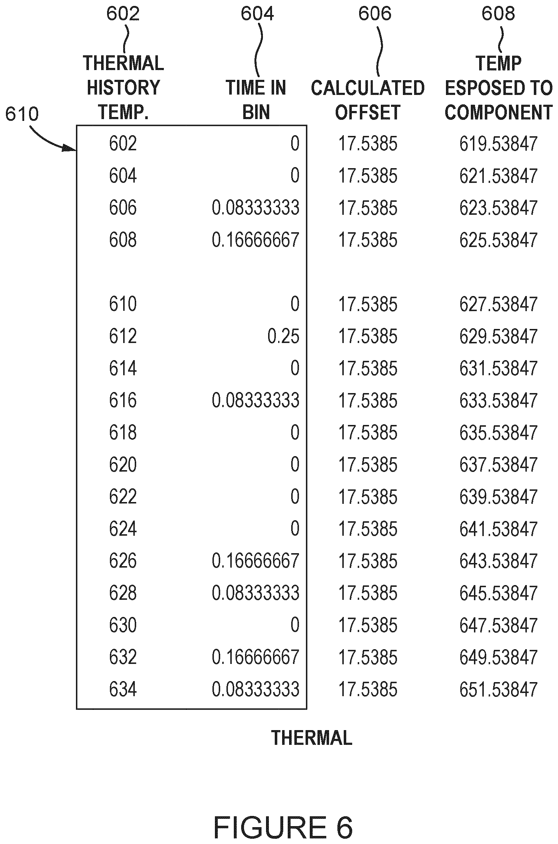

Fig. 6 is an exemplary set of columns 602, 604, 606, and 608 of temperature data that may be output from the system 400 and that show the actual temperature 608 of a given component based on an offset 606 applied to the thermal history data 602. For example, in the exemplary embodiment, an offset 606 of 17.5385° F may have been determined from analysis of an oxide layer formed on a coupon that was positioned in close proximity to a component of interest. As shown in the first row 610, the offset 606 of 17.5385° F may be added to the temperature (i.e., 602°F) within the thermal history 602 to arrive at the actual temperature 608 the component (i.e., 619.53847°F) was exposed to during operation. A user may also view the column 604 to see what fraction of an hour, i.e., an amount of time, that the component was actually exposed to the temperature. This data may be useful in determining a timeframe of when a component failed and what the operating temperature was when the component failed.

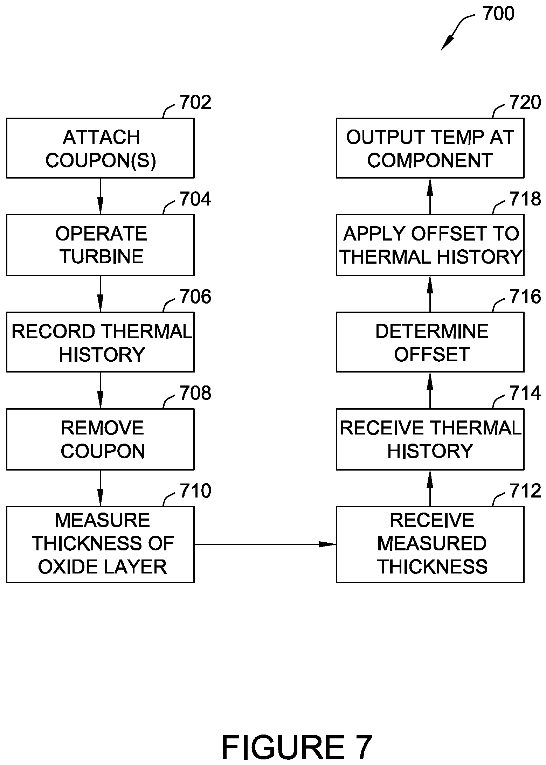

Fig. 7 is a flow diagram of an exemplary method 700 that may be implemented to determine a thermal history of a gas turbine component by analyzing oxides formed on a coupon that is coupled to the component. To do so, generally the method 700 may determine an offset for the temperature component based on the relative distance of the coupon from the temperature sensor. The offset may be added or subtracted, as appropriate, to the temperatures included in the thermal history to determine the actual temperature to which the component was exposed.

Turning more particularly to the flow diagram, the method 700 may include attaching 702 one or more sacrificial coupons to those components of interest to determine their actual thermal limit within the turbine configuration. As described herein, the coupons may function to track the thermal history of the component. The turbine may then be operated 704 as normal. A log of the thermal history of the operation of the turbine may be recorded 706.

A coupon may be extracted 708 during a turbine outage and the thickness of its accumulated oxide layer may be measured710. A cross-sectional analysis may be performed 710 on the coupon to reveal a thickness of the oxide layer formed on the outer surface of the coupon. The thickness of the layer may be correlated to an exposed temperature. Different components in the turbine may have different chemical compositions, but the chemical compositions of the coupons may be consistent and known. For example, a steel alloy may have a known chromium content. The chromium content affects the rate of change of the oxide thickness in a known manner.

The measured thickness may be input 712 to a calculation tool, such as an adder module or other computing device. The thermal history of the turbine may be retrieved 714 as additional inputs into the calculation tool. For example, the thermal history may be provided by a turbine operator or by empirical data from laboratory results. The thermal history may include temperatures, as well as operational data. Operational data may include a record of starts, stops, ramp rate, and a cool down rate. As described herein, the temperatures changes reflected in the thermal history may be used in conjunction with determined offsets to calculate the temperature at a particular component.

The system may determine 716 an offset for the temperature component based on the coupon's relative distance from the temperature sensor. As explained herein, the offset may be determined 716 by measuring the oxide thickness formed on the coupon. More particularly, the temperature exposed to the coupon may then be looked up by the system based on the measured thickness. The determined coupon temperature at the time the coupon was extracted may be compared to the temperature for that time in the histogram data of the thermal history. A calculated difference between the coupon temperature and the listed thermal history temperature (i.e., of the temperature sensor) may comprise the offset for the location of the coupon.

The offset may be added or subtracted 718 as appropriate to the temperatures included in the thermal history to determine the true, actual temperature to which the component was exposed. The determined offset may then be applied to any temperature measurement in the thermal history to output 720 the temperature at the component's coupon at any given time registered in the thermal history.

In this manner, the method 700 may be used to determine the temperature at the component at each of the times included in the thermal history. As such, the method 700 may be used to determine how long the component was exposed to a given temperature. The system may also be able to determine when the failure occurred and the temperature of the component at the time of the failure.

Particular embodiments described herein may take the form of an entirely hardware embodiment, an entirely software embodiment or an embodiment containing both hardware and software elements. In a particular embodiment, the disclosed methods are implemented in software that is embedded in processor readable storage medium and executed by a processor, which includes but is not limited to firmware, resident software, microcode, etc.

Further, embodiments of the present disclosure, such as the one or more embodiments may take the form of a computer program product accessible from a computer-usable or computer-readable storage medium providing program code for use by or in connection with a computer or any instruction execution system. For the purposes of this description, a non-transitory computer-usable or computer-readable storage medium may be any apparatus that may tangibly embody a computer program and that may contain, store, communicate, propagate, or transport the program for use by or in connection with the instruction execution system, apparatus, or device.

In various embodiments, the medium may include an electronic, magnetic, optical, electromagnetic, infrared, or semiconductor system (or apparatus or device) or a propagation medium. Examples of a computer-readable storage medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and digital versatile disk (DVD).

A data processing system suitable for storing and/or executing program code may include at least one processor coupled directly or indirectly to memory elements through a system bus. The memory elements may include local memory employed during actual execution of the program code, bulk storage, and cache memories which provide temporary storage of at least some program code in order to reduce the number of times code must be retrieved from bulk storage during execution.

Input/output or I/O devices (including but not limited to keyboards, displays, pointing devices, etc.) may be coupled to the data processing system either directly or through intervening I/O controllers. Network adapters may also be coupled to the data processing system to enable the data processing system to become coupled to other data processing systems or remote printers or storage devices through intervening private or public networks. Modems, cable modems, and Ethernet cards are just a few of the currently available types of network adapters.

Benefits of an implementation may include generating a full thermal history of a component. Because of the relatively small size of the coupons, a plurality of coupons may be placed on or inside a wide range of components at a relatively low cost. Moreover, each coupon may be destroyed or otherwise oxidized before any harm comes to the actual component to which it is affixed. The offset temperatures may increase the accuracy of temperature monitoring and/or of component failure analysis.

Further aspects of the invention are provided by the subject matter of the following clauses:
A method of determining a temperature to which a component within a turbomachine was exposed, wherein the method comprises operating the turbomachine including the component for an elapsed period of time, determining a thickness of an oxide layer that has formed on a coupon attached to the component, determining a temperature offset based on the thickness measurement of the oxide layer, determining the temperature to which the component was exposed using the temperature offset, and outputting the temperature to which the component was exposed.

The method in accordance with any of the preceding clauses wherein the method further includes receiving a thermal history of an operation of the turbomachine, wherein the thermal history includes the recorded temperature.

The method in accordance with any of the preceding clauses wherein the method further includes determining the thickness of an oxide layer further comprises cross-sectioning the coupon after the coupon has been removed from the component.

The method in accordance with any of the preceding clauses wherein the method further includes attaching a coupon having a known rate of oxidation to the component.

The method in accordance with any of the preceding clauses wherein the method further includes attaching a plurality of coupons to the component.

The method in accordance with any of the preceding clauses wherein the method further includes extracting the coupon from the turbomachine after a pre-defined period of operation of the turbomachine has elapsed.

The method in accordance with any of the preceding clauses wherein the method further includes determining the temperature offset further includes correlating the thickness of the measured oxide layer to a historical temperature associated with the thickness, wherein the historical temperature is one of a plurality of temperatures maintained in the thermal history that each correlate to a plurality of historical thickness measurements.

The method in accordance with any of the preceding clauses wherein the method further includes determining a temperature difference between the measured temperature and the historical temperature.

The method in accordance with any of the preceding clauses wherein the method further includes determining at least one of a moisture content and an operating pressure that the component was exposed to during turbomachine operation.

The method in accordance with any of the preceding clauses wherein the method further includes coupling a replacement coupon to the component at the same location that the oxidized coupon previously occupied within the turbomachine.

A measurement apparatus for use in determining an operating temperature within a turbomachine, wherein the measurement apparatus includes at least one coupon coupled to a component within the turbomachine and a processor configured to receive a measurement of a thickness of an oxide layer that formed on the coupon after the turbomachine has operated with the component for a predetermined period of time, determine a temperature offset based on the thickness of the oxide layer, apply the temperature offset to a measured temperature taken within the turbomachine during operation, and determine an actual temperature to which the component was exposed during operation of the turbomachine using the temperature offset.

The apparatus in accordance with any of the preceding clauses wherein the apparatus further includes receiving a thermal history of an operation of the turbomachine, wherein the thermal history includes a plurality of temperature data acquired during turbomachine operation.

The apparatus in accordance with any of the preceding clauses wherein the apparatus further includes at least one coupon having a known rate of oxidation.

The apparatus in accordance with any of the preceding clauses wherein the apparatus further includes at least one coupon fastened to the component using at least one of welding, an adhesive, and a mechanical fastener.

The apparatus in accordance with any of the preceding clauses wherein the coupon is extracted from the turbomachine after the turbomachine has operated for a period amount of time with the component within the turbomachine.

The apparatus in accordance with any of the preceding clauses wherein the processor is further configured to correlate the measured thickness of the oxide layer to a temperature stored within a thermal history of the turbomachine, wherein each temperature stored within the thermal history is associated with a thickness.

The apparatus in accordance with any of the preceding clauses wherein the processor is further configured to determine a temperature difference between the measured temperature and the stored temperature.

The apparatus in accordance with any of the preceding clauses wherein the processor is further configured to receive at least one input associated with at least one of a moisture content and an operating pressure in close proximity to the component during operation of the turbomachine.

At least one non-transitory computer-readable storage medium with instructions stored thereon that, in response to execution by at least one processor, cause the at least one processor to receive a measurement of a thickness of an oxide layer that formed on a coupon that had been attached to a component of a turbine machine that operated for a pre-defined period of time, determine a temperature offset based on the measured thickness of the oxide, apply the temperature offset to an historical operating temperature of the turbomachine to determine an actual temperature to which the component was exposed during operation of the turbomachine, and output the actual temperature to which the component was exposed during operation of the turbomachine.

The at least one non-transitory computer-readable storage medium in accordance with any of the preceding clauses, wherein the at least one processor is further configured to correlate the measured thickness to at least one historical temperature associated with the thickness, wherein each historical temperature correlates to a thickness measurement.

The previous description of the disclosed embodiments is provided to enable any person skilled in the art to make or use the disclosed embodiments. Various modifications to these embodiments will be readily apparent to those skilled in the art, and the generic principles defined herein may be applied to other embodiments without departing from the scope of the disclosure. Thus, the present disclosure is not intended to be limited to the embodiments shown herein but is to be accorded the widest scope possible consistent with the principles and features as defined by the following claims.

The methods and systems described herein are not limited to the specific embodiments described herein. For example, components of each system and/or steps of each method may be utilized independently and separately from other components and/or steps described herein. For example, the method and systems may also be used in combination with other combustion systems and are not limited to practice only with the gas turbine engines as described herein. Rather, the exemplary embodiment can be implemented and utilized in connection with many other rotary machine and combustion applications.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of determining a temperature (408) to which a component (200) within a turbomachine (100) was exposed, said method comprising:
operating the turbomachine (100) including the component (200) for an elapsed period of time;
determining a thickness (410) of an oxide layer (302) that has formed on a coupon (300) attached to the component (200);
determining a temperature offset based on the thickness measurement (410) of the oxide layer (302);
determining the temperature (408) to which the component (200) was exposed using the temperature offset; and
outputting the temperature (408) to which the component (200) was exposed.

2. The method of Claim 1, further comprising receiving a thermal history (402) of an operation of the turbomachine (100), wherein the thermal history (402) includes the recorded temperature.

3. The method of Claim 1, wherein determining a thickness (410) of an oxide layer (302) further comprises cross-sectioning the coupon (300) after the coupon (300) has been removed from the component.

4. The method of Claim 1, further comprising attaching at least one coupon (300) having a known rate of oxidation to the component (200).

5. The method of Claim 1, further comprising extracting the coupon (300) from the turbomachine (100) after a pre-defined period of operation of the turbomachine (100) has elapsed.

6. The method of Claim 2, wherein determining the temperature offset further includes:
correlating the thickness (410) of the measured oxide layer (302) to a historical temperature associated with the thickness, wherein the historical temperature is one of a plurality of temperatures maintained in the thermal history (402) that each correlate to a plurality of historical thickness measurements; and
determining a temperature difference between the measured temperature and the historical temperature.

7. The method of Claim 1, wherein determining the temperature offset further includes determining at least one of a moisture content and an operating pressure that the component (200) was exposed to during turbomachine (100) operation.

8. A measurement apparatus (400) for use in determining an operating temperature (408) within a turbomachine (100), said measurement apparatus (400) comprising:
at least one coupon (300) coupled to a component (200) within the turbomachine (100); and
a processor (422) configured to:
receive a measurement of a thickness (410) of an oxide layer (302) that formed on the coupon (300) after the turbomachine (100) has operated with the component for a pre-determined period of time;
determine a temperature offset based on the thickness (410) of the oxide layer (302);
apply the temperature offset to a measured temperature taken within the turbomachine (100) during operation; and
determine an actual temperature (408) to which the component (200)was exposed during operation of the turbomachine (100) using the temperature offset.

9. The apparatus of Claim 8, wherein the processor (422) is further configured to:
receive a thermal history (402) of an operation of the turbomachine (100), wherein the thermal history (402) includes a plurality of temperature data acquired during turbomachine (100) operation;
correlate the measured thickness of the oxide layer (302) to a temperature stored within a thermal history (402) of the turbomachine (100), wherein each temperature stored within the thermal history (402) is associated with a thickness; and
determine a temperature difference between the measured temperature and the stored temperature.

10. The apparatus of Claim 9, wherein the at least one coupon (300) has a known rate of oxidation, the processor is further configured to receive at least one input associated with at least one of a moisture content and an operating pressure in close proximity to the component during operation of the turbomachine.
